# EUROPEAN PATENT APPLICATION

(11) **EP 3 382 419 A1**
(43) Date of publication of application: **03.10.2018**
(21) Application number: 17163085.8
(22) Date of filing: 27.03.2017
(51) Int. Cl.: G01S 7/292, G01S 7/527, G01S 13/524, G01S 7/487, G01S 17/93, G01S 13/93, G01S 15/93

(54) **METHOD AND APPARATUS FOR ECHO DETECTION**

(71) Applicant: Melexis Technologies SA, 2022 Bevaix (CH)
(72) Inventor: OTT, Andreas, 99099 Erfurt (DE); GRANJOUX, Sebastien, 92370 Chaville (FR)
(74) Representative: DenK iP

(57) **Abstract**

A method for detecting and processing echo signals comprises detecting reflections of a transmitted signal as echo signals, obtaining digital magnitudes representative of an envelope of the echo signals over time, applying the digital magnitudes to a plurality of data storing cells, estimating a signal threshold by accumulating the digital magnitudes from a predetermined number of reference window cells (A1, A2) at each side of a predetermined cell-under-test in the plurality of data storing cells and multiplying the resulting accumulated signal by a predetermined first weight factor, thus obtaining an estimated signal threshold, comparing the threshold with the signal stored in the predetermined cell-under-test in the plurality of data storing cells, thus reducing chances of false detection.

## Description

### Field of the invention

The invention relates to the field of signal processing and echolocation. More specifically it relates to devices and methods of background noise and clutter removal in CFAR (Constant False Alarm Rate) circuitry for echo detection.

### Background of the invention

Object-detection systems such as radar, sonar, or ultrasound sensors usually comprise a receiver adapted for a specific type of energy wave detection (electromagnetic waves such as radio waves, acoustic or ultrasound waves, etc.). The energy wave is usually sent by either the same sensor or another sensor synchronized to it, and the interaction between an object and the energy wave produces an echo as a response to the emitted signal. The receiver is able to receive and decode such echoes from obstacles. Several variables can be used for decoding the signal, for example the duration between the emission of the energy wave and the arrival of the echo reflected by an object, being proportional to the distance between the sensor and object (linked by the speed of the signal). Signal strength can be also detected.

Signals from background, such as reflections from background surfaces (noise), and signals from objects not considered targets (clutter) produce unwanted signals in the detector, and may generate false alarms, i.e. false detections of presence or absence of objects.

Existing solutions to reduce the accounting and processing of unwanted signals include Constant False Alarm Rate (CFAR) detectors, and they have been applied to RADAR (RAdio Detection And Ranging) and other systems. In a uniform background with few objects, a uniform alarm rate can be used to fix a threshold. A too high signal threshold would mask echoes from targets and information would be lost. A too low signal threshold would account false alarms as target echoes, and the signal would become noisy. An optimal threshold can be obtained, but this is not satisfactory in changing environments, where the noise level may change both spatially and temporally. Adaptive methods were developed to account for such changes in environments, in which a changing threshold can be used, where the threshold level is raised and lowered to maintain a constant probability of false alarm.

There are two main CFAR principles, Cell Average (CA) and Ordered Statistics (OS) based methods as described in literature such as H. Rohling, "Radar CFAR Thresholding in Clutter and Multiple Target Situations," IEEE Transactions On Aerospace and Electronic Systems, pp. 608-621, 1983.

OS-CFAR methods are considered to be too expensive in terms of computation power for sorting the stored samples within every time step. For cost effective single chip solutions CA-CFAR methods are better suited since the computation logic is much simpler.

In CA-CFAR detection schemes, the threshold level is calculated by estimating the level of the noise floor within a reference window around a cell-under-test (CUT). This can be found by taking a block of cells around the CUT (the cells within the reference window) and calculating an average power level thereof. To avoid corrupting this estimate with power from the CUT itself, cells immediately adjacent to the CUT - also called guard cells - are typically ignored for the average calculation. A target is declared present in the CUT if it is both greater than all its adjacent cells and greater than the calculated average power level.

There are several disadvantages to this known CA-CFAR method.

In suppression of false echo detection caused by noise, the average alone does not take into consideration signal waveforms, such as for instance the length of the echo response. Also, without knowing the level that an echo can statistically have versus the expired time of the measurement, it is difficult to prevent erroneous echo detections triggered by noise, since the noise floor might change, for instance due to receiver front-end gain change during measurement, which makes prevention of false alarms uncertain. Additionally, the upper end of the dynamic range may be reached. Thus, an erroneous echo may be triggered by noise with high probability, which is suboptimal.

Besides, in real environments, a plurality of objects of different shapes may be susceptible of detection, and their cross-section (which is an important factor in signal reflection) may be varying as well. Consequently a very weak echo can arrive quite short after a strong echo. In these cases, the generated threshold might still be high as a result of a previously incoming strong echo. The threshold based on a (scaled-) average might still be too high, so that the comparison of the test cell with the actual threshold will miss to detect the echo.

### Summary of the invention

It is an object of embodiments of the present invention to provide a method and detection circuit for a sensor (such as an ultrasound sensor) with good echo detection performance and resolution, and good success rate of location of, even closely located, echoes.

In a first aspect, the present invention relates to a method for detecting and processing echo signals, the method comprising detecting reflections of a transmitted signal as echo signals, obtaining digital magnitudes representative of an envelope of the echo signals over time, and applying the digital magnitudes to a plurality of data storing cells (for example in a sequential way, wherein the digital magnitudes are applied at the same rate as the rate at which the data storing cells receive the magnitudes). The method further comprises estimating the signal threshold by accumulating the digital magnitudes from a predetermined number of reference window cells (A1, A2) at each side of a predetermined cell-under-test in the plurality of data storing cells, and multiplying the resulting accumulated signal by a predetermined first weight factor (K1), thus obtaining an "estimated signal threshold". The "estimated signal threshold" is, in some embodiments of the present invention, the average signal. In some embodiments of the present invention, the method further comprises obtaining an offset threshold from the signal threshold. The offset threshold may for instance be equal to the signal threshold, or may be obtained by adding a predetermined variable offset (K2) to the signal threshold. The method further comprises comparing the offset threshold with the signal stored in the predetermined cell-under-test in the plurality of data storing cells. It is an advantage of embodiments of the present invention that the threshold is ensured to rise above the noise level.

In embodiments of the present invention, each of the cells can store a digital magnitude with a bit width of W. In embodiments of the present invention, in case of overflow, the method comprises assigning a maximum value of 2^{w} - 1 to the offset threshold, if its value surpasses that maximum value. Echo target masking and problems related to data overflow (or integer wrap around) can be advantageously reduced or avoided.

In embodiments of the present invention, the data storing cells form a register. For example, in some embodiments of the method, the digital magnitudes are applied to a plurality of data storing cells of a First In First Out (FIFO) register. The digital magnitudes propagate from cell 1 to cell 2 etc. till cell m of the plurality of data storing cells, according to any suitable method. Well-known techniques of data processing, such as sliding window technique, can be easily applied in these type of registers. In alternative embodiments, the data storing cells may be implemented in software, e.g. the value could be written to a memory address, like a RAM address for instance, and could be read out later on, for being used in computations.

In embodiments of the present invention, the predetermined variable offset is calculated from the expected difference between the average noise level obtained from the cells (A1, A2) and the peak noise level. The offset can be equal to such difference or higher, but it should not be too high in order not to mask targets. For example, the offset should not be higher than the peak noise level.

In embodiments of the present invention, the accumulation of signals does not take into account a predetermined set of cells, called "guard cells". In embodiments, the method comprises accumulating the digital signals from all the reference windows cells at each side of a predetermined cell-under-test in the plurality of data storing cells, except for the signals stored in guard cells, the guard cells (G) being cells located between the cell-under-test and the reference windows cells (A1, A2) at each side of the cell-under-test. For example, the guard cells may be one or two cells adjacent to the CUT in the register, at each side of the CUT. It is an advantage of embodiments of the present invention that the sensitivity of echoes located closely together in time is increased by suppressing the influence of long signal slopes.

In embodiments of the present invention, a derivative signal portion can be obtained and added to the "estimated threshold" (e.g. to the average signal). This derivative signal portion is obtained by obtaining a difference between the signals of two predetermined cells at a first side of the cell-under-test (first neighborhood), obtaining a difference between the signals of two predetermined cells at a second side of the cell-under-test (second neighborhood), and finally adding the differences and multiplying the result by a predetermined second weight factor (K3), thus obtaining the derivative signal portion.

In embodiments of the present invention, the derivative signal portion combined with the estimated signal threshold (e.g. the average signal) can then be combined with the offset threshold.

It is an advantage of embodiments of the present invention that the derivative signal portion of the generated threshold leads to an increased distance between threshold and level of the cell-under-test while it magnifies the transition slope of the threshold, so that closely located echoes of different amplitude can be advantageously detected with a high success rate.

In some embodiments, the second weight factor (K3) is a predetermined constant. It can also be a function determined according to parameters of the signal.

It is an advantage of embodiments of the present invention that external variables, such as temperature or variable circumstances, can be compensated

In embodiments of the present invention a value of zero is assigned to any negative value of the combined derivative signal portion and estimated signal threshold (e.g. the average signal).

In embodiments of the present invention, obtaining a difference between the signals of two predetermined cells comprises obtaining the difference between the signal of the nearest cell to the cell-under-test and another cell at the same side of the cell-under-test.

It is an advantage of embodiments of the present invention that the signal of a guard cell can also be taken into account, rather than completely disregarding the information stored in the guard cells.

In some embodiments, generating a derivative signal comprises obtaining the difference between at least two further predetermined cells at the first side and at the second side of the cell-under-test, adding both differences and multiplying the result by at least a further predetermined weighting function Kn.

In embodiments of the present invention, applying the digital magnitudes to a plurality of cells comprises sequentially applying subsequent signals in subsequent cells of a plurality of data storing cells.

In embodiments of the present invention, the plurality of data storing cells comprises an odd number of cells, and the method further comprises assigning the central cell of the plurality of data storing cells as cell-under-test.

It is an advantage of embodiments of the present invention that each of the first and second sides of the cell-under-test may comprise a same number of cells, making it symmetrical. This way, the threshold may be generated symmetrically, assuming the echo response is symmetrical as well. If the echo response is different on rising and falling slopes, this can be compensated for by making the arrangement asymmetrical. Hence the present invention allows to tune the threshold to the symmetricallity of the echo response stored in the register.

In embodiments of the present invention, applying the digital magnitudes comprises sequentially applying the digital magnitudes to a plurality of data storing cells by clocking the plurality of data storing cells to a speed of available digital magnitude signals.

In a second aspect, the present invention provides method for detecting and processing echo signals. The method comprises detecting reflections of a transmitted signal as echo signals; obtaining digital magnitudes representative of an envelope of the echo signals over time; applying the digital magnitudes to a plurality of data storing cells; estimating a signal threshold; and comparing the signal threshold with the signal stored in the predetermined cell-under-test in the plurality of data storing cells. Estimating the signal threshold on the one hand comprises accumulating the digital magnitudes from a predetermined number of reference window cells at each side of a predetermined cell-under-test in the plurality of data storing cells and multiplying the resulting accumulated signal by a predetermined first weight factor, thus obtaining an estimated signal threshold; generating a derivative signal portion by obtaining a difference between the signals of two predetermined cells at a first side of the cell-under-test, obtaining a difference between the signals of two predetermined cells at a second side of the cell-under-test, the second side being different from the first side, and adding the differences and multiplying the result by a predetermined second weight factor, thus obtaining the derivative signal portion; and combining the estimated signal threshold with the derivative signal, thus obtaining the signal threshold. In this case, the weighting factor which weighs the average could be made larger than 1/(A1 + A2), with A1 and A2 the reference window cells at either side of the cell-under-test. This would introduce a threshold level higher than the average. The variable offset signal, as introduced in the first aspect of the present invention, could be zero.

In a further aspect, the present invention relates to a sensor comprising a front-end detector for detecting reflections from obstacles in response to a transmitted signal and converting these into magnitude signals, a plurality of data storing cells comprising memory cells for storing digital magnitudes of an envelope of the magnitude signals, a summation unit adapted for accumulating digital magnitudes from a predetermined number of memory cells (A1, A2) at each side of a predetermined cell-under-test in the plurality of data storing cells, a multiplier for multiplying a signal obtained from the summation unit by a predetermined first weight factor (K1), optionally an adder for adding a predetermined variable offset (K2) to a signal obtained from the multiplier, and a comparator for comparing a signal derived from the signal obtained from the multiplier, e.g. an output of the optional adder, with the signal stored in the cell-under-test. It is an advantage of embodiments of the present invention that a sensor, for instance an ultrasound sensor, is provided with low sensitivity to background noise.

In embodiments of the present invention, the memory cells of the sensor have a bit width W, and an upper threshold limiter, for limiting an output of the adder to a maximum value equal to 2^{w}-1. It is an advantage of embodiments of the present invention that the sensor, e.g. ultrasound sensor, has low probability of masking of echoes from a target.

In some embodiments, the sensor further comprises means for generating derivative signals between signals of two predetermined cells at a same side of the cell-under-test, and a further summation unit for adding an output of the means for generating derivative signals with an output of the multiplier.

In embodiments of the present invention, the sensor may also comprise means for inverting the signal of one of the two predetermined cells, and a summation unit, adapted for obtaining a difference between signals in two memory cells at a first side of the cell-under-test and for obtaining a difference between signals in two memory cells at a second side of the cell-under-test. It is an advantage of embodiments of the present invention that the ultrasound sensor can advantageously detect closely located echoes of different amplitude with a high success rate.

In embodiments of the present invention, the sensor further comprises a lower threshold limiter for limiting an output of the summation unit to a minimum value equal to zero. It is an advantage of embodiments of the present invention that the logic operations can be simpler, as in most cases the signal envelope only includes positive values.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 illustrates a prior art signal processing structure for an echo detection system.
FIG. 2 illustrates an exemplary echo envelope (amplitude vs time) where the received signal from a receiver front-end contains 5 echoes which need to be detected.
FIG. 3 shows a signal processing structure according to embodiments of the present invention, providing offset to the threshold.
FIG. 4 shows the echo envelope of FIG. 2, with four out of five echoes detected.
FIG. 5 shows another signal processing structure according to embodiments of the present invention, providing offset to the threshold and a derivative signal portion.
FIG. 6 illustrates threshold generation according to a circuit as illustrated in FIG. 5, showing different signal components on the representative scenario (zoomed to the 4th and 5th echo response).
FIG. 7 shows the echo envelope of FIG. 2 with all 5 echoes detected.
FIG. 8 shows a flow chart of a method of obtaining a threshold according to embodiments the present invention.
FIG. 9 shows a signal processing structure according to embodiments of the present invention, where the derivative is made on two different positions, at either side of a cell-under-test.
FIG. 10 illustrates a CA-CFAR detection circuit with offset K2 and derivative signal component applied to the threshold, and peak detection circuit, in accordance with embodiments of the present invention.
FIG. 11 illustrates the echo detection performance of a circuit according to FIG. 10 on a representative echo scenario.
FIG. 12 is a flow chart illustrating a method of echo detection using peak detection according to embodiments of the present invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "echo", reference is made to any signal received by a detector after reflection from an object. For example, an echo may be an acoustic signal reflected from targets and background in ultrasound imaging; however, the term is not limited to acoustic signals and it can be applied to other signals (e.g. electromagnetic signals, for example a radar echo).

Where in embodiments of the present invention reference is made to "unwanted signals", reference is made to background noise, clutter (signals received from objects not considered targets) and any other signal that is not reflected from targets. The type of unwanted signal may depend on the type of application and on the type of target. Background noise and non-target objects would produce unwanted signals which, upon detection, produce a "false alarm". The probability of a false alarm is normally a predetermined value obtained by manipulating the signal threshold (also called decision threshold, because it determines whether a signal is a target or unwanted signal). This probability is measured as an average of time periods in which a false alarm occurs, and it is defined as a false alarm rate.

Where in embodiments of the present invention reference is made to "CFAR", reference is made to a group of algorithms which adapt the signal threshold in order to obtain a predetermined "Constant False Alarm Rate". For example, one of the CFAR algorithms, which takes into account Cell Averaging, receives the name of "CA-CFAR".

The method and device according to embodiments of the present invention will be described in relation to ultrasound signal detection, but they can be applied and adapted to other types of detectors and methods which extract the echo envelope of an energy wave signal (detection by sonar, radar, lidar, etc.).

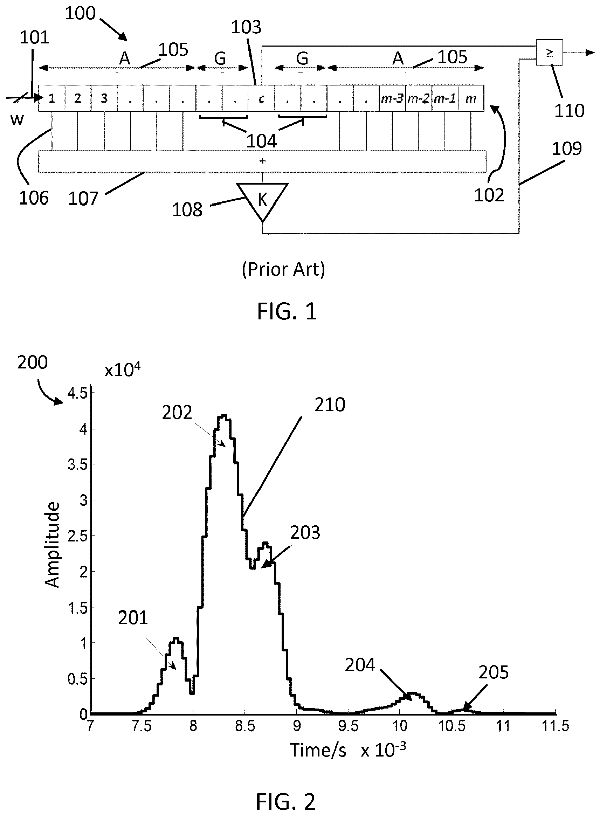

A well-known representation of a CA-CFAR detection circuit is shown in the signal processing structure 100 of FIG. 1. The received signal may be introduced in the circuit as raw data 101, or alternatively the received signal can be squared, obtaining the "square-of-magnitude" or "absolute square" (which represents the power of the signal), and then introduced in the circuit. Raw data 101 comprising values corresponding to the digital magnitude or digital square-of-magnitude of the echo envelope is introduced into a plurality of memory cells 102 with m cells (e.g. an addressable plurality of cells, such as a register), while preferably the number m of cells is odd. The receiver delivers the data with a predetermined update rate to the memory cells, which preferably accept the data at the same rate. A cell-under-test (CUT) c 103 is selected to be e.g. at the center of the register 102. The signals of a few, in the example illustrated two, guard cells G 104 adjacent to, and at each side of, the CUT 103 are not used. The signals stored in the remainder of the cells A 105 of the register 102, also called reference window cells, are transferred via a tap 106 to an adder 107 where they are added, after which the sum is scaled by applying a multiplication factor K (for instance equal to the inverse of the number of cells A 105, and/or taking into account detector scale factors, etc.), which can be applied by a multiplier 108. This way, an averaged signal 109 can be obtained. This averaged signal 109 may be used as an estimated threshold in a comparator 110 for being compared with the signal in the test cell 103. If the signal in the test cell 103 is superior to the threshold, an echo signal is detected, which is assumed to come from an object in a scene looked at. If the signal in the test cell 103 is lower than the threshold 109, no echo is detected. The signals of guard cells 104 are not used in the determination of the threshold in order to suppress influence of long signal slopes, and to increase the sensitivity for echoes located closely together in time.

In a first aspect, the present invention relates to a method for detecting and processing of echo signals. Embodiments of the present invention describe a method of processing and detecting echo signals where the echo detection quality, even in environments with multiple targets, is significantly high. In embodiments of the present invention, a noise threshold is generated, for example an adaptive noise threshold, based on CA-CFAR schemes and methods.

In embodiments of the present invention, the threshold is estimated by a CFAR algorithm as described above and, after obtaining the noise threshold, a predetermined offset is added to the threshold. The offset threshold can then be compared to the CUT. Without the offset threshold, the received signal without echo is determined by the noise coming from the receiver. The filtered signal output from the receiver forms a waveform which is similar to a signal waveform with a weak amplitude. Adding offset to the threshold allows to prevent erroneous echo detection due to an increase of the noise floor (due to e.g. changes in the gain of the receiver front-end during the measurement, or e.g. reaching the upper end of the available dynamic range in the receiver front-end). The influence of signal waveform (e.g. length of echo response) is less critical in suppression of false alarm detections.

In embodiments of the present invention, the CFAR algorithm (based on sliding window methods) includes
- calculating a scaled sum, e.g. the average, of signals in the reference window cells of a signal processing structure, at both sides of a CUT (e.g. by summing the values of the signals in reference window cells and applying to the sum a scaling factor, for instance a multiplication factor based on the number of cells),
- then obtaining a derivative by calculating the difference between values of cells neighboring the CUT at either side thereof, and one of the reference window cells at the same side compared to the CUT, and applying a multiplication factor, and
- adding up the results of the calculations, thus obtaining the raw threshold.
This way, the probability of detecting two echoes of different amplitude is high, even if they are close to each other. For example, a threshold after detection of a strong echo may still be high (which may also occur when an offset threshold is applied) when the signal from a second echo, weaker than the first one, enters the register.

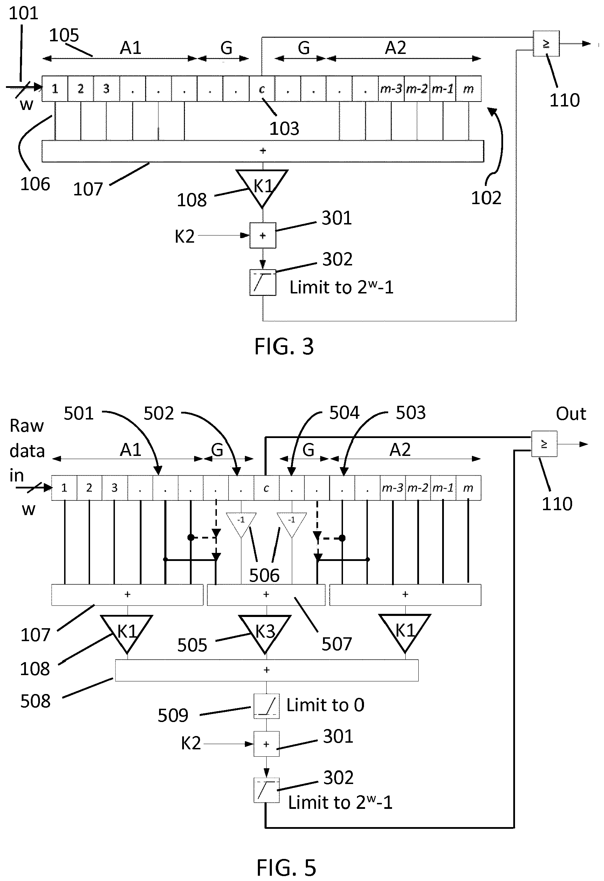

FIG. 2 shows a graph 200 of the digital representation of the amplitude vs. time in seconds, where the digital amplitude illustrated has a bit width of 16 bit (thus the digital amplitude may take values between 0 and 65535), but the present invention may use other values. The graph represents the exemplary echo envelope 210 of a reflected signal, detected in a receiver front-end of a sensor, comprising 5 echoes 201, 202, 203, 204, 205 from targets. Thus, these five echoes need to be detected. In embodiments of the present invention, the received digital signal of the echo envelope 210 is applied to a register. For example, the echo envelope 210 can be applied to a FIFO (First In First Out) register, for example to m cells of the FIFO register 102 of a signal processing structure shown in FIG. 3, according to embodiments of the present invention. The present invention, however, is not limited to FIFO registers, and other means of storing information can be used, such as software implementations, e.g. each value could be written to a RAM address, which can later be read for computation, or in general the signal can be stored as the signal flow propagates from a cell 1 to a cell m. The signals each have a bit width W, hence signals with a bit width of W may be stored in each cell of the register 102. One of the cells of the register 102, preferably a cell in or close to the middle of the row of cells of the register 102, is selected as being a CUT 103. The signals stored in particular cells of the register 102, i.e. in the reference window cells 105, are used to extract a threshold value. In particular embodiments, these reference window cells 105 do not neighbor the CUT 103, and one or more guard cells 104 may be present between the CUT and the closest reference window cell. The signals of a few, in the example illustrated two, guard cells G 104 adjacent to, and at each side of, the CUT 103 may not be used for calculation of the scaled threshold value. This suppresses the influence of long signal slopes and increases the sensitivity for echoes located closely together in time. The number of guard cells G is typically lower or much lower than the number of reference window cells A used in each reference window for obtaining the signal threshold. The guard cells are optional, and they are not part of the reference window cell used for calculating the average threshold.

The CUT 103 can be any predetermined cell in the register. In embodiments of the present invention, the center of the register (cell c) can be used as a test cell 103 in order to decide if a valid echo has been received or not. Some embodiments present a highly symmetrical echo response, e.g. after being pre-processed by the receiver front end (such as by signal conditioning, filtering, etc.). In these cases, the rising slope is similar or close to the falling slope of the echo envelope. Thus, it is advantageous that the CUT 103 is the center c of the register, so as to have symmetry around the CUT for accurate analysis of symmetrical echo responses. However, other non-central cells may be chosen in an asymmetric configuration, depending on design characteristics, different types of receivers, etc. For example, in an asymmetric configuration (A1≠A2), a weight could be applied to the data from cells in one neighborhood, and a different weight to the data from cells in the other neighborhood.

The threshold for the comparison with the signal of the test cell is obtained from the signals in the reference window cells 105, drawn over taps 106 to an adder 107. Typically signals from reference window cells at either side of the CUT are involved. The sum of these signals, typically from cell 1 to A (first reference window) and from cell A-m to m (further reference window), obtained from the adder 107, is then scaled, for instance by multiplication in a multiplier 108 with a factor K1. The factor K1 depends on factors such as the estimation method, the detector and/or on the false alarm rate required. In case the threshold is the average of the signals of the reference window cells, K1 includes the inverse of the number of cells of which signals are summed; for example K1 may be smaller than or equal to 1/(A1+A2), assuming that a first reference window comprises a first number A1 of cells and a second reference window comprises a second number A2 of cells.

In some embodiments of the present invention, the number m of cells in the register 102 is odd, advantageously ensuring that the cells next to the CUT, at either side thereof, can be divided in two groups (two neighborhoods) with the same number of cells (A+G) in each neighborhood. In such case, A2=A1=A and K ≤ 1/(2*A).

An offset may then be applied to the scaled, e.g. averaged, signal, for instance by adding a factor K2 to the scaled signal in an adder 301. This allows bringing the threshold well above the noise floor. This offset might be evaluated and calibrated to a dedicated scenario and might change during the measurement. In some embodiments of the present invention, the offset is set to a value greater than the average noise level obtained from the cells A1, A2, e.g. greater than the sums of all taps 106 of A1 and A2 positions divided by the sum A1+A2 or 2A, as the case may be, but under the peak noise level. For example, it may be the difference between the average noise level and the peak noise level. In an exemplary echo envelope, if the average signal is 10 while the peak is 30, the offset K2 should be higher than 20. Higher values for K2 can be used, but not so high that it suppresses weak signals. For example, K2 may not surpass the peak noise level.

As a consequence of the applied offset, the newly generated "offset threshold" signal can exceed the signal range of the CUT. In order to avoid this, a limitation can be applied to the now generated threshold (for example, applying a limitation of 2^{w}- 1, W being the bit width of the register cells). The limitation can be applied by means of a limiter 302, for example by means of data treatment and combinational logic, preventing integer overflow of the signal range. Other methods may include adapting the bit width of the cells (e.g. using 17-bit memory cells for 16-bit signals received from the receiver and/or digital signal processors), data treatment, or any other method available in the art.

This limited offset threshold can be compared with the value in the CUT 103. If the value in the CUT exceeds the value of the limited offset threshold, an echo is detected; else no echo is detected.

However, this solves the problem of noise only partially. The shape and slow decreasing rate of the threshold may produce problems such as masking. If the offset is too low, the probability of detecting false echoes caused by noise increases. If the offset is too high, some signals in a group appearing close to each other and with different amplitude will be masked. Using only the averaging may lead to loss of sensitivity.

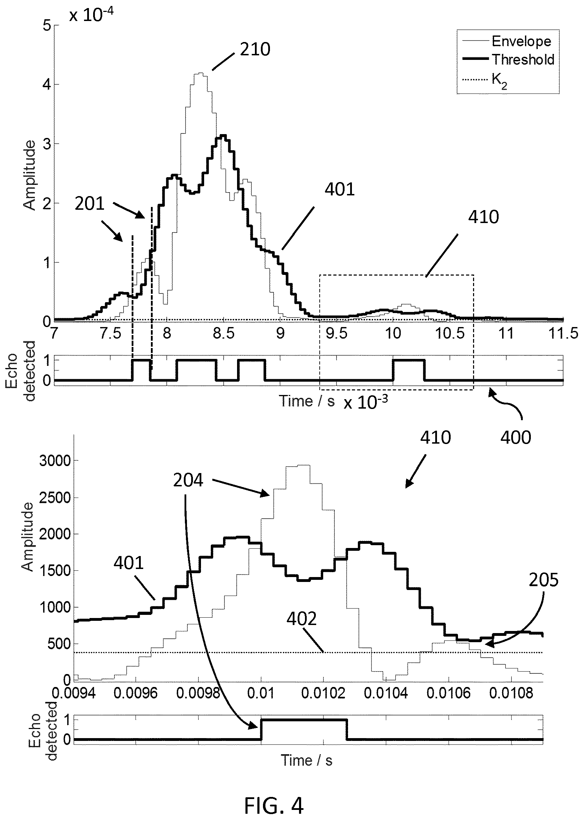

FIG. 4 shows, in the upper graph, the previous graph of FIG. 2, but displays not only the echo envelope 210 but also an averaged "offset threshold" 401 obtained by averaging and adding an offset 402, as discussed with respect to FIG. 3. As can be seen in the echo detection graph 400 at the bottom, when the threshold 401 is lower than the echo envelope 210, an echo 201 is detected. Only four echoes, however, are detected. The fifth peak 205 remains undetected. Masking can be seen in the zoomed area 410 in the lower graph. The averaged threshold 401 is lower than the envelope 210 in the echo region at the fourth peak 204, but it is higher than the signal at the fifth peak 205.

In some embodiments of the present invention, the factor K2 can be variable, for reducing the chance of masking. For example, a variable K2 could be pre-set to a value calculated, for example, on the weakest detectable echo signal vs. duration, and could provide a time-varying offset which may e.g. decrease with time. Because the expected echo strength in some applications is proportional to the inverse of the squared distance, the echo strength would also be proportional to the inverse of the squared measurement time. However, adaptability in real time should be improved without increasing too much the computational load, and the problem of masking weak signals is still present.

In order to solve these problems, the CA-CFAR detection method has been developed further by introducing a derivative signal portion to the threshold. An exemplary embodiment is shown in FIG. 5. A derivative signal portion is determined by obtaining the difference between the signal of two distinct cells (e.g. by changing the sign of the outcome of one tap and adding it to outcome of the other tap) at one side of the CUT, obtaining the difference between the signal of two distinct cells at the other side of the CUT, summing the differences, and optionally multiplying the summed differences by a multiplication factor, before summing the result to the threshold obtained as before. The two cells at one side of the CUT, of which a difference is made, may both be guard cells, or a guard cell and one of the reference window cells A used for cell averaging, or two reference window cells A used for cell averaging. In some embodiments, for example if the CUT is at the center of the register, the position of the cells with respect to the CUT may be the same in each neighborhood (thus obtaining the difference between two cells at one position and at its symmetrical position with respect to the CUT).

The waveform is advantageously taken into account by the derivative signal portion, because the threshold is lowered just before a valid echo response is coming.

The average (with or without detector scale factor) can be obtained according to the method described with respect to FIG. 3, after or before or in parallel with the calculation of the derivative signal portion as illustrated in FIG 5. The average signal can be added to the derivative signal portion, thus obtaining a combined threshold or raw threshold. The signal may be limited to zero, in order to avoid reaching negative values (in the present case, because the envelope signal of the echo can only be positive, there is no need to include negative values and the operations can be simplified). Then, an offset (e.g. K2) can be added, also with limitation to maximum values as explained before. This final value can be compared to the signal through the tap connected to the CUT, in a comparator 110.

For example, as shown in FIG. 5, a derivative signal portion is generated by adding, in an adder 507, the difference between any appropriate tap from 1 to c-2 (e.g. cell 501 at a position c-4) and tap at c-1 (e.g. the guard cell 502 immediately adjacent to the CUT), to the difference between any appropriate tap from c+2 to m (e.g. cell 503 at a position c+4) and tap at c+1 (e.g. the guard cell 504 immediately adjacent to the CUT in the second neighborhood). This sum can be multiplied by a weighting function K3, for example by the multiplier 505, wherein K3 can be a constant or variable function depending on several parameters of the signal. The figure for example shows taps c-4 and c+4 as well as c-1 and c+1 are used to build the derivative signal portion. However, as indicated by the dashed taps on the cells c-3, c-2, c+2, c+3 , any cell from 1 to c-2 (and c+2 to m respectively) can be used to obtain the derivative together with the cell adjacent to the CUT (the present invention not being limited to the use of the adjacent cell: the difference may be between any two distinct cells in the same neighborhood).

The difference can be made in several different ways. For example, FIG. 5 shows a means 506 to invert the sign of the signals of the tap at c-1 and c+1, and an adder 507 adds it to the taps at e.g. c-4 and c+4 (or any other suitable cell of the same neighborhood) thus obtaining the difference of the signals. The weighting function K3 can be applied with a multiplier 505 or any other suitable unit to include a scale factor, if desired.

In the present case, two predetermined cells A 501, 503 (which can also participate in the calculation of the average signal) and two guard cells G 502, 504 can be used to obtain the difference, in each neighborhood. The signal collected by two adjacent guard cells in each neighborhood can also be used. Thus, any signal collected by guard cells is advantageously utilized and information is not lost.

Afterwards this signal can be combined with the signal generated by accumulating taps 1 to A and A-m to m together with a subsequent scaling by a factor K1. For example, the derivative can be added (e.g. using an adder 508) to a calculated CA-CFAR threshold, for example to an average as seen with reference to FIG. 1 or 3 using adders 107 and multipliers 108.

Since the resulting signal can become negative, the summed signal may be limited to zero, for example by a limiter 509 or any other suitable unit.

An offset K2 can also be added to the threshold using an adder unit 301 as before. Similar to the circuit in FIG. 3, the result is preferably limited (e.g. with a limiter 302) in order to avoid exceeding the signal range of the CUT. Finally, the generated threshold is compared with the signal level available in the CUT. The output of the comparison is the echo detection signal, ready for further processing.

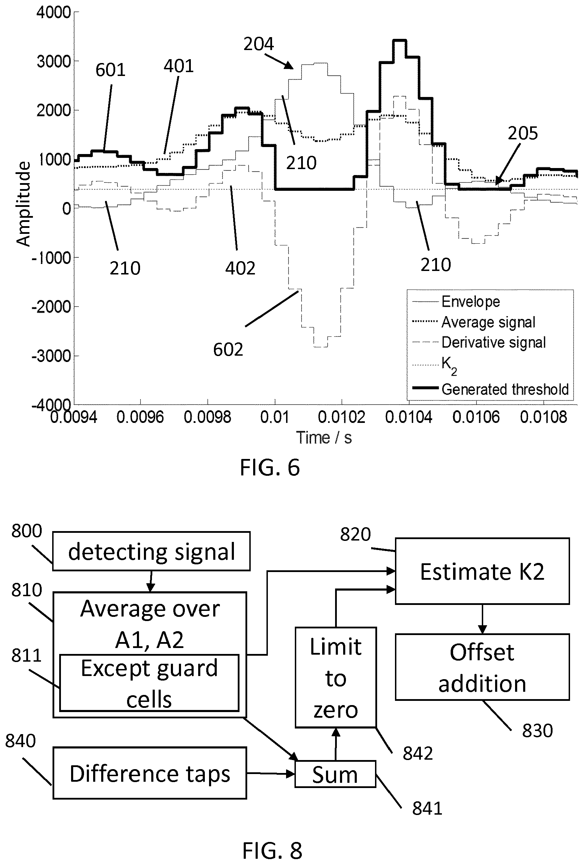

FIG. 6 shows the different signal components for deriving the threshold as proposed in FIG. 5. The generated threshold 601 is obtained from the derivative curve 602 and the average threshold 401 (including thereafter limiting the output to a minimum value of zero and adding the offset 402). It can be seen that the derivative signal component 602 leads to an increased distance between the generated threshold 601 and the level of the CUT, while it increases the transition slope of the threshold, so that closely located echoes 204, 205 of different amplitude can be detected with an increased success rate.

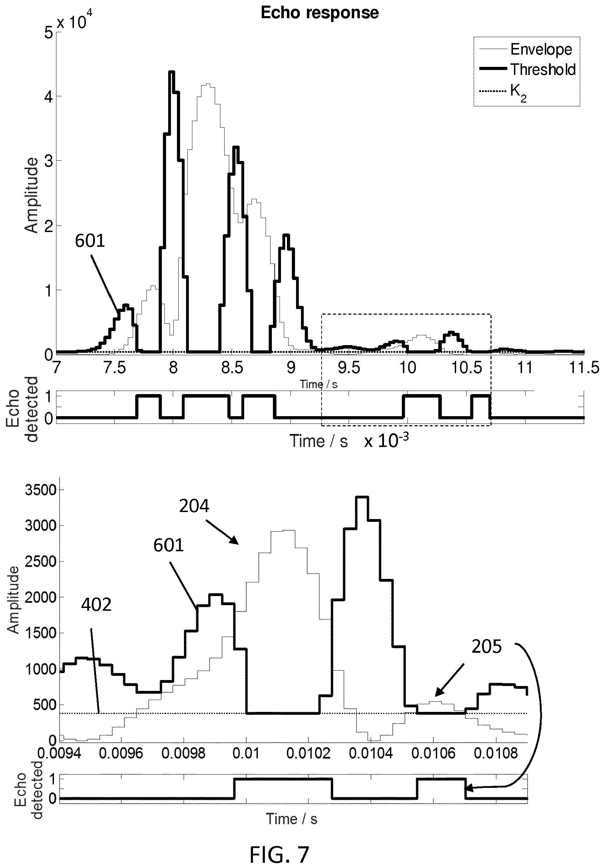

The echo detection performance of the proposed implementation is shown in FIG. 7 for the representative scenario. It can be seen that the derivative component leads to a threshold level defined by the offset K2 within the duration of the echo responses, so that also the 5th echo is detected.

The generated threshold 601 is limited to positive values, and then it is raised with the offset 402. Due to the derivative signal portion, the threshold is reduced drastically (as it seen at 10 ms) and, as shown in the zoomed view (lower drawing) for the 4^{th} and 5^{th} echoes, the 5^{th} echo response 205 is now detected correctly, as well as the echo 204.

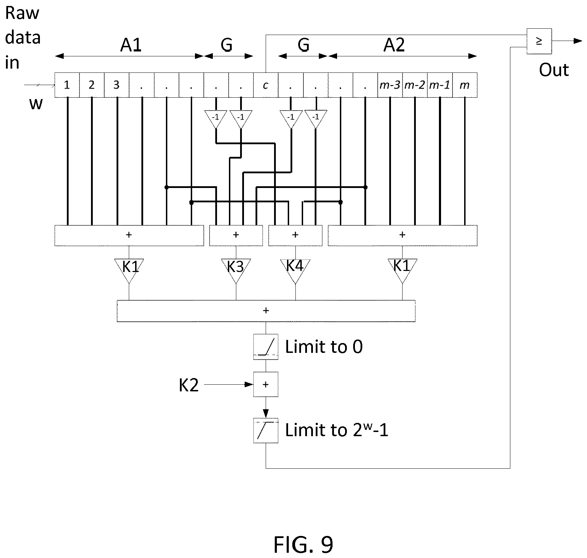

The approach shown in FIG. 5 is not limited to a derivative signal portion generated by incorporating only one difference in each left and right neighborhood of the CUT. For example, an additional derivative component composed by adding the difference between any appropriate tap from 1 to c-3 and tap c-2 to the difference between any appropriate tap from c+3 to m and tap c+2, and multiplying it with a weighting factor K4, and so forth. The selected cells for calculating the difference might be asymmetrical between the left and right neighborhood around the CUT c 103. An example of an alternative solution is illustrated in FIG. 9, where the derivative is made on two different positions. In the embodiment illustrated, a first difference is made between the signals stored in cell c-4 and cell c-1, and a second difference is made between the signals stored in cell c+4 and cell c+1. Both the first and the second difference are summed, and this sum is weighed with a weighing factor K3, thus generating a second derivative signal. Further, a third difference is made between the signals stored in cell c-3 and cell c-2, and a fourth difference is made between the signals stored in cell c+3 and cell c+2. The third and the fourth difference are summed, and this sum is weighed with a weighing factor K4, thus generating a second derivative signal. The first and second derivative signals may be added to the estimated signal threshold obtained by accumulating the digital magnitudes from a predetermined number of reference window cell A1, A2 at each side of the CUT and multiplying the resulting accumulated signal by a weigh factor K1. The thus obtained signal threshold may be directly compared with the signal stored in the CUT, or alternatively, as illustrated in FIG. 9, an offset threshold K2 may be, but does not need to be, added to the earlier obtained threshold. Before and/or after adding the offset, the obtained signals may be limited between minimum or maximum values, respectively. These limitations may also be applied if no offset value is added.

Embodiments of the method can be advantageously applied to the sliding window method, improving decision on presence of echoes and hence on presence of targets. Embodiments of the present invention allow the suppression of false echo detections and at the same time detect targets with echoes closely located to each other, even at different amplitude. A fast reduction of the threshold with differential component (faster than the thresholds calculated with existing methods, such as the cell averaging method) is provided. This can be combined with an offset, thus obtaining an offset threshold

For example, a combination of the derivative calculation of the threshold and the offset would result in the following method:
The signals can be received from an ultrasound receiver front-end which delivers a digital magnitude or digital square-of-magnitude of the received echo envelope to the apparatus of the present invention, e.g. a square law detector (which provides the digital square-of-magnitude).

The received digital magnitude or digital square-of-magnitude of the echo envelope is applied to a FIFO (First In First Out) register comprising m cells, connected to network taps, with a bit width of W for each. Preferably the number of cells is odd, although the present invention is not limited thereto.

The FIFO register is clocked with the speed of the samples available from the receiver front-end, assuming that the receiver front-end circuit (possibly including a digital signal processor) is adapting the sampling rate at its output to a reasonable speed, allowing a well suited resolution of a typical envelope of an ultrasound echo.

An average signal is built by accumulating taps 1 to A and A-m to m together and multiplying it with the weighting (or scaling) factor K1

A derivative signal portion is built by adding the difference between the signals of two predetermined cells in a neighborhood, with the difference between the signals of two predetermined cells in another neighborhood. First, the difference between two suitable taps, e.g. any appropriate tap from 1 to c-2 and tap c-1, from the right neighborhood (containing the cells filled after the CUT) is obtained; and second, the difference between another two suitable taps, e.g. any appropriate tap from c+2 to m and tap c+1, from the left neighborhood (with the cells filled before the CUT) is obtained. Then, both differences are added. The result can be multiplied by the weighting function K3.

A raw threshold is built by summing the average signal and the derivative signal portion together and limit the result at 0, i.e. it would be 0 in case the result would be negative.

An appropriate offset K2 is added to the raw threshold in order to introduce a margin to the noise floor and accomplish the threshold for echo detection by limiting its upper value to 2^{w}-1 (for example, 65535 in case that W=16 bits).

Finally, the value of the signal through the center tap c is compared with the generated threshold. The result of the comparison represents the echo detection signal (echo is detected if the signal in the center tap is higher than the generated threshold, no echo detected otherwise) and is ready for further processing.

Another aspect of the echo detection according to embodiments of the present invention deals with estimation errors related to the point at which the envelope is crossing the actual threshold. Echo responses which arrive with a distance large enough to let the magnitude decay to very low values, can be located very precisely when implementing a method and/or device according to embodiments of the present invention, since the envelope crosses almost at 50% of the related echo peak. Echo responses which arrive very closely after one another, so that the responses start to merge, lead to accuracy errors. This becomes clear from FIG. 2, where the 3^{rd} response arrives shortly after the 2^{nd} one. Consequently the crossing point of the magnitude is at approximately 90% of the related peak of the 3^{rd} echo. As a result the 3^{rd} echo is recognized later and therefore the distance to the object which is causing the 3^{rd} echo response is over-estimated.

To overcome this disadvantage, the proposed method can further be enhanced by referencing the echo detection to the related peak values of the envelope.

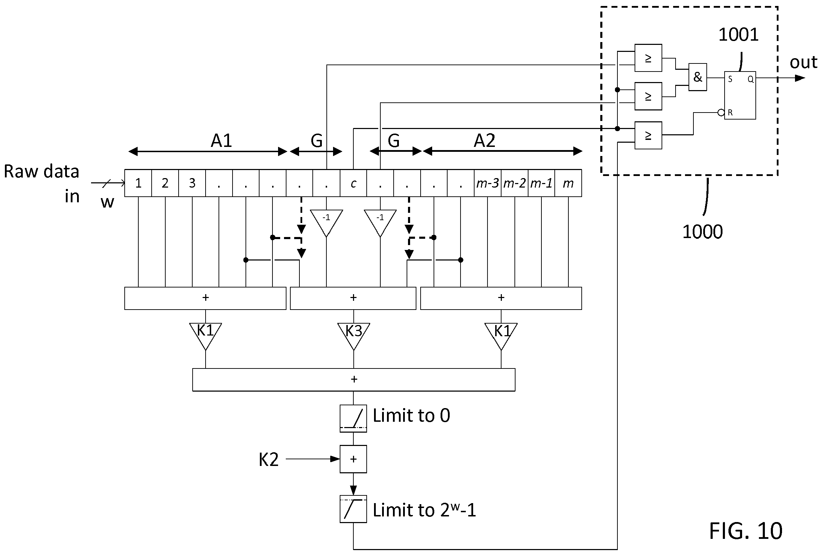

In FIG. 10, the proposed detection system is further equipped with a peak detector 1000 configured for analyzing the data in the adjacent cells c-1 and c+1 in comparison to the center cell-under-test c. In case both cells c-1 and c+1 are equal or smaller than the CUT (in the figure, the center cell c), a peak is identified and its occurrence is stored in a memory element in case the envelope is above the actual threshold. In the example illustrated in FIG. 10 a RS flip-flop 1001 is used as memory element. In case the envelope is below the actual threshold the memory element, e.g. RS flip-flop 1001, is kept in reset state by the echo detection output signal described in the previous embodiments of the present invention. As a result, the peaks occurring while the envelope is below the threshold are not recognized and it is ensured that the memory is reset before the arrival of the next peak in the received envelope curve. Other configurations for peak detection (e.g. digital treatment by software, different arrangement of logic gates and/or counters, etc.) can be used.

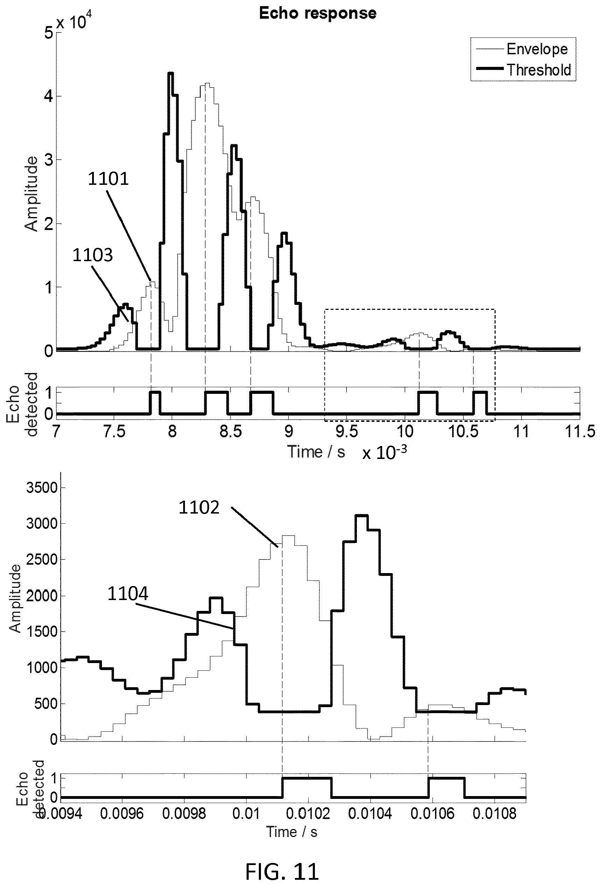

By employing the improved method according to embodiments of the present invention using peak detection, the generated echo detection is now indicating the occurrences of the peaks 1101, 1102 instead of the crossings 1103, 1104 of the envelope with the actual threshold as can be seen in FIG. 11, which also shows that the detection of the relative position of the 3^{rd} echo response related to the 2^{nd} echo response has been improved as compared to the upper part of FIG. 7.

The flow chart of FIG. 8 shows an exemplary method of obtaining a threshold according to embodiments of the present invention. First, a receiver detects - block 800 in the flow chart - reflections of a transmitted signal (echo) and, which can be digitalized, and sends it to a register. The register comprises memory cells, and one of the cells (e.g. the central one) is the CUT. The signals arrived after and before (cells in the neighborhoods A1, A2) the one in the CUT are accumulated 810, for example added and treated, for example averaged 810 (thus including a factor for averaging, which may also take into account the estimation method, the detector and/or the required false alarm rate). Optionally, guard cells are not used 811 in this operation. This signal can be directly used to calculate the offset threshold, by estimating 820 the value K2 to add to the signal threshold, thus obtaining 830 the offset threshold. In advantageous embodiments, however, a derivative signal is obtained by obtaining 840 the signal difference between two predetermined cells (via taps) at each side of the CUT. The difference is summed up, optionally multiplied by a factor K3, and then combining 841, for example adding, the result to the average threshold obtained in the previous step 810. Optionally, a limit to zero can be applied 842. Then, the process continues as before, estimating 820 the value K2 and obtaining 830 the offset threshold by addition.

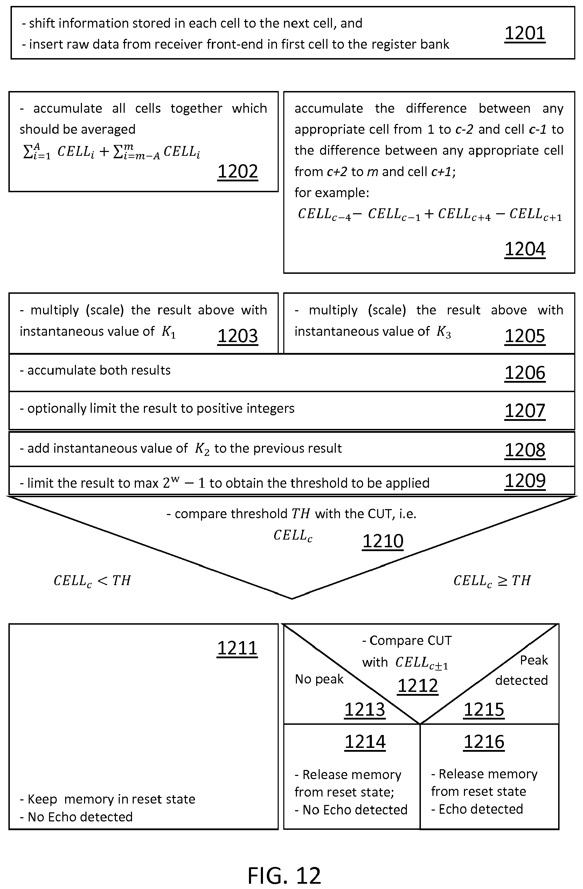

In FIG. 12, a flow chart of an echo detection algorithm using peak detection according to embodiments of the present invention is shown. First, information stored in each cell is shifted to a next cell, and raw data received from the receiver front-end is inserted 1201 in the first cell to the receiver bank. Information received before and after the information in the cell-under-test (cells in the neighborhoods A1, A2, outside the guard cells, if present) is accumulated 1202, for example averaged, and this value is scaled 1203 with an instantaneous value of K1. A derivative signal portion is generated by adding 1204 the difference between any appropriate tap from 1 to c-2 and tap c-1 (e.g. the guard cell immediately adjacent to the CUT), to the difference between any appropriate tap from c+2 to m and tap at c+1 (e.g. the guard cell immediately adjacent to the CUT in the second neighborhood). This sum can be scaled, e.g. multiplied 1205, by a weighting function K3, wherein K3 can be a constant or variable function depending on several parameters of the signal. Both results are accumulated 1206, and optionally limited 1207 to positive integers. An instantaneous value of K2 may be added 1208 to the previous result, and this result is limited 1209 to max 2^{w}-1 to obtain the threshold TH to be applied. The threshold TH is compared 1210 with the data stored in the CUT, i.e. cell c in the example illustrated. If the value stored in the CUT is smaller than the threshold, no echo is detected. A peak detection memory is kept 1211 in reset state, indicating that no peak is detected to the output port. If, on the other hand, the value stored in the CUT is larger than the threshold, the CUT is compared 1212 with the data in the taps immediately neighboring the CUT. If no peak is detected 1213, the peak detection memory is released 1214 from reset state and indicating that no echo is detected to the output port. If a peak is detected 1215, a peak event is stored in the peak detection memory, and indicating that a peak is detected to the output port, and an echo is detected 1216.

In some embodiments of the present invention, the derivative signal portion can be extracted and applied to the analysis without applying the offset threshold K2 at the end. Thus, the method would comprise estimating the signal threshold by accumulating the digital magnitudes from a predetermined number of reference window cells (A1, A2) at each side of a predetermined CUT in the plurality of data storing cells, multiplying the resulting accumulated signal by the weight factor (K1), and then obtaining the derivative signal and adding it, and finally comparing the obtained signal threshold (also called raw threshold) with the signal stored in the predetermined CUT in the plurality of data storing cells.

This would be equivalent to add a K2 equal to zero.

In a further aspect, the present invention relates to a device for echo detection, more specifically for instance an ultrasound sensor. The device comprises an energy wave receiver, for instance an ultrasound receiver, which may comprise a front-end receiver. The detector may be a square law detector, although any other type of detector can be used. It may also comprise an emitter, which may be integrated in the device for echo detection or may be a part separated from the device but synchronized therewith.

A memory unit, for example a lookup table, a CPU, a data buffer, etc. can be used to retain the data from the detector. The data may be organized according to a FIFO scheme in a register. The organization may, according to synchronous logic, use a clock. The data can be retained in a series of cells connected to taps, each with a predetermined bit width W.

The signal may be applied to a register of m cells, m being for example an odd number, which allows choosing the central cell as CUT and allowing the neighboring reference windows to comprise the same number of cells around the CUT. Each cell has a bit width W, which may be the same as the data from the receiver output, or one bit higher to avoid overflow. The width can be adapted to the required dynamic range. In some embodiments, the width is 16 bit, but other values can be used.

A network tap can be used to retrieve the signal from a plurality or all of cells surrounding a CUT. Adders 107 and multipliers 108 can be used to obtain the clutter power, and/or the product of the sum and the scaled factor of the detector, and/or the average of the signal. Logic operation can for instance be performed in a digital implementation with logic gates, digital adders, or in software, using known methods. Additional adders 301 and optionally limiters 302 can be used to obtain an offset threshold, reducing the probability that noise will be detected as a target and obtaining an accurate sensor. Additional units (e.g. inverters 506, further adders 507 and multipliers 505) can be used to obtain the difference between selected neighboring cells.

In some embodiments of the present invention, a self-adapting system can be obtained, by providing tuning of parameters, for example by means of a training sequence. Parameters A and/or G, and the location of taps for generating the derivative signal portion, can be adaptable.

The present invention can be applied in any echo detection system (radar, sonar, lidar, etc). For example, it can be applied to ultrasonic systems. The time duration measured between the start of the emitted ultrasound signal and the arrival of the echo reflected by an object is proportional to the distance between the sensor and the object, linked by the speed of the signal (e.g. speed of sound). This measurement is suited to detect the distance between the sensor and an object which used e.g. in Park Distance Control (PDC) application systems.

In situations with multiple targets, for example, a very weak echo can arrive quite short before a strong echo. Embodiments of the present invention may provide a good PDC system (and other linked applications) which allow the detection of these weak echoes from relatively small obstacles which may still damage a vehicle (a tall curb, a tree, a metal protrusion such as a thin pipe), even if they are detected closely to a strong peak (e.g. from a nearby wall close to the small obstacle).

## Claims

1. A method for detecting and processing echo signals, the method comprising
- detecting (800) reflections of a transmitted signal as echo signals,
- obtaining digital magnitudes representative of an envelope (210) of the echo signals (201, 202, 203, 204, 205) over time,
- applying the digital magnitudes to a plurality of data storing cells (102),
- estimating a signal threshold by accumulating (810) the digital magnitudes from a predetermined number of reference window cells (A1, A2) at each side of a predetermined cell-under-test (103) in the plurality of data storing cells (102) and multiplying the resulting accumulated signal by a predetermined first weight factor (K1), thus obtaining an estimated signal threshold.

2. The method according to claim 1, wherein applying the digital magnitudes to a plurality of data storing cells comprises sequentially applying the digital magnitudes to a plurality of data storing cells of a First In First Out register (102).

3. The method according to any of the previous claims, wherein accumulating the digital magnitudes from a predetermined number of reference window cells comprises accumulating (811) the digital signals from all the reference windows cells (A1, A2) at each side of a predetermined cell-under-test (103) in the plurality of data storing cells (102), except for the signals stored in guard cells, the guard cells being cells located between the cell-under-test (103) and the reference windows cells (A) at each side of the cell-under-test (103).

4. The method according to any of the previous claims, further comprising:
- obtaining (830) an offset threshold (401) from the signal threshold,
- comparing the offset threshold (401) with the signal stored in the predetermined cell-under-test (103) in the plurality of data storing cells (102).
wherein obtaining (830) an offset threshold (401) from the signal threshold optionally comprises adding a predetermined variable offset (K2) to the signal threshold.

5. The method according to claim 4 wherein each of the cells is adapted to store a digital magnitude with a bit width of W, further comprising assigning a maximum value of 2^{w} - 1 to the offset threshold (401) if the offset threshold surpasses that maximum value.

6. The method according to any of claims 4 or 5, wherein obtaining (830) an offset threshold (401) comprises adding a predetermined variable offset (K2) to the signal threshold, the predetermined variable offset (K2) being equal to or higher than the expected difference between the average noise level obtained from the cells (A1, A2) and the peak noise level.

7. The method according to any of the previous claims, wherein estimating the signal threshold further comprises
- Generating a derivative signal portion (602) by
- obtaining (840) a difference between the signals of two predetermined cells (501, 502) at a first side of the cell-under-test (103),
- obtaining (840) a difference between the signals of two predetermined cells (503, 504) at a second side of the cell-under-test (103), the second side being different from the first side,
- adding the differences and multiplying the result by a predetermined second weight factor (K3), such as for instance a predetermined constant or a function determined according to parameters of the signal, thus obtaining the derivative signal portion,
- combining (841) the estimated signal threshold with the derivative signal, thus obtaining the signal threshold.

8. The method according to claim 7, further comprising assigning the value of zero to any negative value of the threshold signal obtained from the combined derivative signal portion and estimated threshold signals.

9. The method according to any of claims 7 or 8, wherein obtaining (840) a difference between the signals of two predetermined cells comprises obtaining the difference between the signal of the nearest cell (502, 504) to the cell-under-test (103) and another cell at the same side of the cell-under-test (103).

10. The method according to any of claims 7 to 9, wherein generating a derivative signal portion further comprises obtaining (840) the difference between at least two further predetermined cells at the first side and at the second side of the cell-under-test (103), adding both differences and multiplying the result by at least a further predetermined weighting function Kn.

11. The method according any of the previous claims, wherein applying the digital magnitudes to a plurality of cells comprises applying subsequent signals in subsequent cells of a plurality of data storing cells (102).

12. The method according to any of the previous claims, furthermore comprising performing peak detection of an envelope (210) of the echo signals (201, 202, 203, 204, 205) by analyzing data in data storing cells (102) neighboring the predetermined cell-under-test (103) at each side thereof.

13. A method for detecting and processing echo signals, the method comprising
- detecting (800) reflections of a transmitted signal as echo signals,
- obtaining digital magnitudes representative of an envelope (210) of the echo signals (201, 202, 203, 204, 205) over time,
- applying the digital magnitudes to a plurality of data storing cells (102),
- estimating a signal threshold by
o accumulating (810) the digital magnitudes from a predetermined number of reference window cells (A1, A2) at each side of a predetermined cell-under-test (103) in the plurality of data storing cells (102) and multiplying the resulting accumulated signal by a predetermined first weight factor (K1), thus obtaining an estimated signal threshold, and
o Generating a derivative signal portion (602) by
- obtaining (840) a difference between the signals of two predetermined cells (501, 502) at a first side of the cell-under-test (103),
- obtaining (840) a difference between the signals of two predetermined cells (503, 504) at a second side of the cell-under-test (103), the second side being different from the first side,
- adding the differences and multiplying the result by a predetermined second weight factor (K3), thus obtaining the derivative signal portion,
o combining (841) the estimated signal threshold with the derivative signal, thus obtaining the signal threshold,
- comparing the signal threshold with the signal stored in the predetermined cell-under-test (103) in the plurality of data storing cells (102).

14. A sensor comprising
a front-end detector for detecting reflections of a transmitted signal and converting these into magnitude signals
a plurality of data storing cells (102) comprising memory cells (103, 104, 105) for storing digital magnitudes of an envelope of the magnitude signals,
a summation unit (107) adapted for accumulating digital magnitudes from a predetermined number of memory cells (A1, A2) at each side of a predetermined cell-under-test (103) in the plurality of data storing cells (102),
a multiplier (108) for multiplying a signal obtained from the summation unit by a predetermined first weight factor (K1), and
a comparator (110) for comparing a signal derived from the signal obtained from the multiplier with the signal stored in the cell-under-test.

15. The sensor according to claim 14, further comprising means (506, 507, 505) for generating derivative signals between signals of two predetermined cells at a same side of the cell-under-test, and a further summation unit (508) for adding an output of the means for generating derivative signals with an output of the multiplier (108), the means for generating derivative signals optionally comprising means (506) for inverting the signal of one of the two predetermined cells, and a summation unit (507), adapted for obtaining a difference between signals in two memory cells at a first side of the cell-under-test and for obtaining a difference between signals in two memory cells at a second side of the cell-under-test.
